(19) Europäisches Patentamt
European Patent Office
Office européen des brevets

(11) **EP 1 264 253 B1**

(12) **EUROPÄISCHE PATENTSCHRIFT**

(45) Veröffentlichungstag und Bekanntmachung des Hinweises auf die Patenterteilung:
**20.09.2006 Patentblatt 2006/38**

(21) Anmeldenummer: **00991557.0**

(22) Anmeldetag: **21.12.2000**

(51) Int Cl.:
***G06F 17/50*** *(2006.01)*

(86) Internationale Anmeldenummer:
**PCT/DE2000/004607**

(87) Internationale Veröffentlichungsnummer:
**WO 2001/065421 (07.09.2001 Gazette 2001/36)**

(54) **VERFAHREN UND ANORDNUNG ZUR MODELLIERUNG EINES SYSTEMS**

METHOD AND ARRANGEMENT FOR MODELLING A SYSTEM

PROCEDE ET DISPOSITIF POUR LA MODELISATION D'UN SYSTEME

(84) Benannte Vertragsstaaten:
**AT BE CH CY DE DK ES FI FR GB GR IE IT LI LU MC NL PT SE TR**

(30) Priorität: **28.02.2000 DE 10009344**

(43) Veröffentlichungstag der Anmeldung:
**11.12.2002 Patentblatt 2002/50**

(73) Patentinhaber: **Panoratio Database Images GmbH**
**80333 München (DE)**

(72) Erfinder:
• **HAFT, Michael**
**81737 München (DE)**
• **HOFMANN, Reimar**
**80796 München (DE)**
• **TRESP, Volker**
**81739 München (DE)**

(74) Vertreter: **Dokter, Eric-Michael**
**Viering, Jentschura & Partner,**
**Patent- und Rechtsanwälte,**
**Postfach 22 14 43**
**80504 München (DE)**

(56) Entgegenhaltungen:
**EP-A- 0 572 335         US-A- 4 620 286**

• **HAFT M ET AL: "Model-independent mean-field theory as a local method for approximate propagation of information" NETWORK: COMPUTATION IN NEURAL SYSTEMS, FEB. 1999, IOP PUBLISHING, UK, Bd. 10, Nr. 1, Seiten 93-105, XP001000444 ISSN: 0954-898X**

**Beschreibung**

Die Erfindung betrifft eine Ermittlung eines Modells eines technischen Systems, welches Modell mehrere Teilmodelle umfasst.

Eine Ermittlung eines solchen Modells ist aus [1] bekannt.

Bei diesem Modell mit Teilmodellen, einem sogenannten statistischen Wahrscheinlichkeitsmodell mit einer versteckten Variablen y, wird eine Wahrscheinlichkeitsverteilung P für einen Zustand x, welcher Zustand x beschrieben wird durch kontinuierliche Zustandsgrößen $x_i$ mit $x_i \in R$, beschrieben durch:

$$P(\mathbf{x} \mid \Theta) \equiv \sum_j P(\mathbf{x} \mid y, \Theta) P(y \mid \Theta), \qquad (1)$$

wobei mit $\Theta$ Parameter des Modells, mit i ein Index für eine Zustandsgröße, mit j eine Anzahl der Teilmodelle, mit P(a|b) eine bedingte Wahrscheinlichkeit einer Variablen a unter der Bedingung einer Variablen b und mit $\sum_j (\ldots)$ eine Summation über die j Teilmodelle bezeichnet wird.

Bei diesem Modell wird die Wahrscheinlichkeitsverteilung P(x | y, $\Theta$) eines Teilmodells j beschrieben unter Verwendung einer Gaussverteilung der Form:

$$P(\mathbf{x} \mid y, \mathbf{m}_y, \sigma) \propto \exp\left\{\frac{1}{2}\left(\frac{\mathbf{x} - \mathbf{m}_y}{\sigma}\right)^2\right\} \qquad (2)$$

wobei mit $m_y$ ein Mittelwert, mit $\sigma$ eine Varianz, mit exp(...) eine Exponentialfunktion und mit P(a|b) eine bedingte Wahrscheinlichkeit einer Variablen a unter der Bedingung b beschrieben wird.

Das aus [1] bekannte Modell wird in einer Trainingsphase derart trainiert, dass an einem realen System Zustandsgrößen zu vorgegebenen Zeitpunkten k ermittelt und jeweils die Zustandsgrößen für einen der vorgegebenen Zeitpunkte k zu einem Trainingsdatum zusammengefasst werden. Eine Vielzahl solcher Trainingdaten bilden einen Trainingsdatensatz.

Mit dem Trainingsdatensatz wird das Modell trainiert. Eine Übersicht über verschiedene Trainingsverfahren ist ebenfalls in [1] und [2] zu finden.

In der Trainingsphase wird üblicherweise folgende Kostenfunktion L, eine logarithmische Likelihood, minimiert:

$$L(\Theta) = \sum_i \log(P(\mathbf{x}_k \mid \Theta)) \qquad (3)$$

wobei mit $\mathbf{x}_k$ ein Trainingsdatum, mit $\Theta$ im Training anzupassende Parameter, mit log(...) eine Logarithmusfunktion und mit P($\mathbf{x}_k$ | $\Theta$) eine bedingte Wahrscheinlichkeit des Trainingsdatum $\mathbf{x}_k$ unter Bedingung der Parameter $\Theta$ bezeichnet wird.

Die Minimierung der logarithmischen Likelihood erfolgt üblicherweise unter Verwendung eines Expectation-Maximization-Verfahren (EM-Algorithmus), wie es aus [2] bekannt ist.

Aus [3] ist eine Anordnung zur Übertragung von Daten zwischen miteinander verbundenen Rechnern bekannt.

Die Komponenten dieser Anordnung sind Teile eines Kommunikationsnetzes, dem sogenannten World-Wide-Web (WWW).

Das Kommunikationsnetz verbindet einzelne Rechner derart miteinander, so dass die Rechner Daten gemäß eines vorgegebenen Übertragungsprotokoll, dem "Transmission Control Protocol (TCP)/ Internet Protocol (IP)", austauschen können. Um eine einheitliche Bearbeitung von Daten zu ermöglichen, liegen viele Daten in einem einheitlichen Format, dem sogenannten Hyper-Text-Markup-Language (HTML)-Format, vor.

Ferner ist aus [3] bekannt, unter Verwendung eines WWW-Browsers bestimmte Daten im WWW zu suchen und diese Daten auf einem Bildschirm darzustellen. Ein solcher WWW-Browser und ein den WWW-Browser realisierendes Computerprogramm sind aus [3] bekannt.

Diese Daten können im Rahmen eines Dienstes, welcher in dem Kommunikationsnetz von einem Rechner angefordert werden kann, übertragen werden. Ein derartiger Dienst ist beispielsweise ein Bereitstellen von Information.

Dabei kann ein einzelner Rechner (Nutzer) über das Kommunikationsnetz den Dienst bei einem anderen einzelnen Rechner (Server) anfordern.

Im Rahmen des Dienstes werden Daten zwischen dem Nutzer und dem Server über das Kommunikationsnetz übertragen.

Aus [3] ist weiter bekannt, dass ein Rechner, der Daten in dem Kommunikationsnetz zur Verfügung stellt und bei dem Daten angefordert werden können, ein solcher Server ist.

Eine Kommunikation zwischen einem Nutzer und einem Server, bei welcher der Nutzer einen Dienst von dem Server anfordert und der Server diese Anforderung erfüllt, wird als eine Sitzung bezeichnet. Dementsprechend wird eine Kommunikation zwischen einem Nutzer und einem Server in dem WWW als Internet-Sitzung bezeichnet.

Bei einer Internet-Sitzung eines Nutzers wird eine Information, die die Internet-Sitzung beschreibt, bei dem ausgewählten Server in einem sogenannten "LogFile" gespeichert.

Diese Information umfasst beispielsweise eine Identifizierung des Nutzers und eine Dauer der Internet-Sitzung.

Eine solche Internet-Sitzung beschrieben durch die Information kann als ein Zustand eines Systems "Internet-Sitzung" interpretiert werden. Die Information würde in diesem Fall Zustandsgrößen des Systems beinhalten.

Der Erfindung liegt das Problem zugrunde, ein Verfahren und eine Anordnung, anzugeben, mit welchen ein Modell mit Teilmodellen eines technischen Systems, beispielsweise des Systems "Internet-Sitzung", ermittelt werden kann, welches Modell das technische System mit verbesserter Genauigkeit als bei dem oben beschriebenen Verfahren beschreibt.

Das Problem wird durch das Verfahren und durch die Anordnung gemäß dem jeweiligen unabhängigen Patentanspruch gelöst.

Bei dem Computer-implementierten Verfahren zur Ermittlung mindestens eines Teilmodells eines Modells eines technischen Systems, wobei ein Zustand des Systems durch Zustandsgrößen beschrieben wird und mindestens eine Zustandsgröße eine diskrete Zustandsgröße ist, werden mehrere Sätze von Werten der Zustandsgrößen bestimmt. Aus den Sätzen wird eine Wahrscheinlichkeitsverteilung für die Zustandsgrößen ermittelt. Unter Verwendung der Sätze und der Wahrscheinlichkeitsverteilung für die Zustandsgrößen und unter Verwendung eines statistischen Lernverfahrens wird das Teilmodell des Systems ermittelt, wobei das Teilmodell das System unter Voraussetzung der Wahrscheinlichkeitsverteilung für die Zustandsgrößen beschreibt.

Die Anordnung zur Ermittlung mindestens eines Teilmodells eines Modells eines technischen Systems, wobei ein Zustand des Systems durch Zustandsgrößen beschrieben wird und mindestens eine Zustandsgröße eine diskrete Zustandsgröße ist, weist einen Prozessor auf, der derart eingerichtet ist, dass

- mehrere Sätze von Werten der Zustandsgrößen bestimmbar sind,
- aus den Sätzen eine Wahrscheinlichkeitsverteilung für die Zustandsgrößen ermittelbar ist,
- unter Verwendung der Sätze und der Wahrscheinlichkeitsverteilung für die Zustandsgrößen und unter Verwendung eines statistischen Lernverfahrens das Teilmodell des Systems ermittelbar ist, wobei das Teilmodell das System unter Voraussetzung der Wahrscheinlichkeitsverteilung für die Zustandsgrößen beschreibt.

Die Anordnung ist insbesondere geeignet zur Durchführung des erfindungsgemäßen Verfahrens oder einer dessen nachfolgend erläuterten Weiterbildungen.

Bevorzugte Weiterbildungen der Erfindung ergeben sich aus den abhängigen Ansprüchen.

Die im weiteren beschriebenen Weiterbildungen beziehen sich sowohl auf das Verfahren als auch auf die Anordnung.

Die Erfindung und die im weiteren beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer im weiteren beschriebenen Weiterbildung möglich durch ein computerlesbares Speichermedium, auf welchem ein Computerprogramm gespeichert ist, welches die Erfindung oder Weiterbildung ausführt.

Auch können die Erfindung und/oder jede im weiteren beschriebene Weiterbildung durch ein Computerprogrammerzeugnis realisiert sein, welches ein Speichermedium aufweist, auf welchem ein Computerprogramm gespeichert ist, welches die Erfindung und/oder Weiterbildung ausführt.

In einer Weiterbildung umfasst das Modell mehrere Teilmodelle.

Auch können alle Zustandsgrößen diskrete Zustandsgrößen sein.

In einer Ausgestaltung ist die Wahrscheinlichkeitsverteilung eine Multinomialverteilung oder eine Binomialverteilung.

In einer Weiterbildung wird ein charakteristischer Satz von Werten der Zustandsgrößen ermittelt, wobei die Wahrscheinlichkeitsverteilung für die Zustandsgrößen bei dem mindestens einen charakteristischen Satz ein Extremum aufweist. Das Extremum kann ein Maximum sein.

Ferner kann für den charakteristischen Satz eine semantische Bezeichnung bestimmt werden.

In einer Ausgestaltung werden mehrere charakteristische Sätze ermittelt.

Die zumindest eine diskrete Zustandsgröße kann durch Diskretisierung einer kontinuierlichen Zustandsgröße ermittelt werden.

Zu einer Verbesserung des Modells ist es zweckmäßig, dass für das Teilmodell ein Maß für eine statistische Unsicherheit bestimmt wird.

Das Maß für die statistische Unsicherheit, beispielsweise eine bedingte Entropie, kann bei dem statistischen Lernverfahren berücksichtigt werden.

In einem solchen Fall kann bei dem statistischen Lernverfahren nur ein solches Teilmodell gelernt werden, welches ein kleines Maß für die statistische Unsicherheit aufweist.

In einer Ausgestaltung ist das Modell ein Bayesianisches Netz.

Bei dem statistischen Lernverfahren kann ein logarithmisches Likelihood bestimmt werden.

Auch kann bei dem statistischen Lernverfahren ein Expectation-Maximization-Verfahren durchgeführt werden.

In einer Weiterbildung wird ein Zustand des Systems bestimmt durch eine Messung von Zustandsgrößen und/ oder eine Vorgabe von Zustandsgrößen.

Die Ausgestaltung kann eingesetzt werden zu einer Prognose eines Zustands eines Systems.

Bei der Prognose werden nur teilweise Zustandsgrößen eines Satzes von Zustandsgrößen bestimmt und unter Verwendung des Modells und der teilweisen bestimmten Zustandsgrößen werden weitere Zustandsgrößen dieses Satzes ermittelt.

In einer Weiterbildung ist das System definiert als ein Internetzugriff.

In diesem Fall kann die Weiterbildung eingesetzt werden zu einer Analyse einer Vielzahl von Internetzugriffen.

Ein Ausführungsbeispiel der Erfindung ist in Figuren dargestellt und wird im weiteren näher erläutert.

Es zeigen

Figur 1    eine Skizze eines Kommunikationssystems gemäß einem ersten Ausführungsbeispiel;

Figur 2    ein WebLog-File mit Informationen über Zugriffe verschiedener Nutzer auf eine Web-Seite;

Figur 3    Verfahrenschritte bei einer Modellierung eines Systems "Internet-Sitzung" gemäß einem ersten Ausführungsbeispiel;

Figur 4    ein statistisches Modell, welches einen Zugriff auf eine Sammlung von Web-Seiten beschreibt;

Figur 5    ein statistisches Modell, welches einen Zugriff auf eine Sammlung von Web-Seiten beschreibt und bei welchem Benutzerszenarien dargestellt sind;

Figur 6    ein statistisches Modell, welches einen Zugriff auf eine Sammlung von Web-Seiten beschreibt und bei welchem Benutzerszenarien dargestellt sind.

Ausführungsbeispiel: Analyse von Internet-Sitzungen

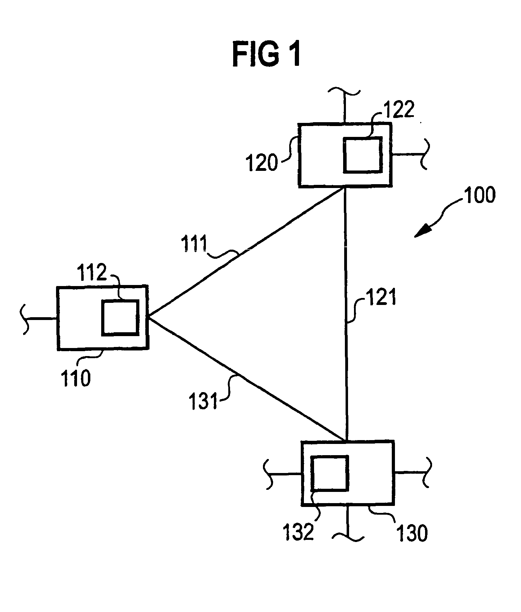

**Fig.1** zeigt schematisch eine Struktur eines Kommunikationsnetzes 100, eines sogenannten World-Wide-Web (WWW), wie es in [3] beschrieben ist.

Bei dem Kommunikationsnetz 100 sind einzelne Rechner 110, 120 130 durch Verbindungen 111, 121, 131, über welche Daten übertragen werden können, verbunden.

Der Rechner 110 und der Rechner 120 sind jeweils sogenannte Nutzerrechner, d.h. unter Verwendung eines solchen Nutzerrechners kann ein Nutzer in dem WWW Informationen, welche in dem WWW angeboten werden, nutzen.

Der Rechner 130 ist ein sogenannter Serverrechner, welcher Informationen in dem WWW anbietet.

Jeder Nutzerrechnern 110, 120 hat jeweils einen Speicher 112, 122 in dem ein Softwareprogramm, ein sogenannter WWW-Browser, wie er in [3] beschrieben ist, gespeichert ist.

Unter Verwendung eines solchen WWW-Browsers kann ein Nutzerrechner bestimmte Informationen in dem WWW suchen, gefundene Informationen zu sich übertragen und die übertragenen Informationen auf einem Bildschirm darstellen.

Eine Kommunikation zwischen einem Nutzer und einem Server, bei welcher der Nutzer einen Dienst von dem Server anfordert und der Server diese Anforderung erfüllt, wird als Sitzung oder Zugriff bezeichnet.

Bei jeder Sitzung eines Nutzers wird eine Information, die die jeweilige Sitzung beschreibt, bei dem benutzten Server in einem sogenannten "LogFile" in einem Speicher 132 gespeichert.

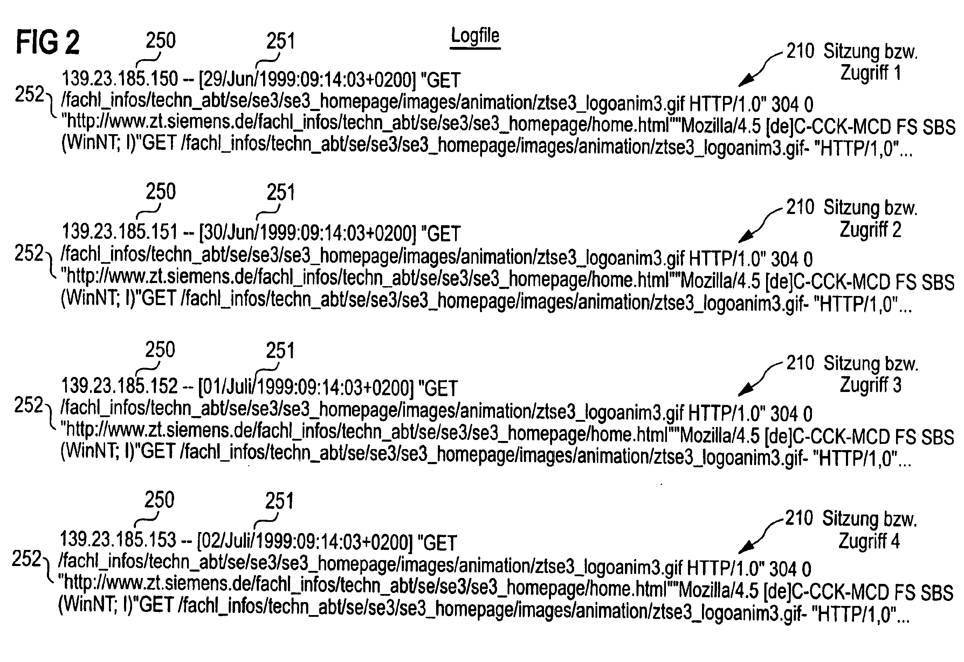

In **Fig.2** ist ein solches LogFile 200 eines Servers schematisch dargestellt, in welchem Informationen von vier Sitzungen 210, 220, 230, 240 von vier verschiedenen Nutzern gespeichert sind.

Eine Information über eine Sitzung eines Nutzers umfasst jeweils folgende Teilinformationen:

- eine Angabe über den jeweiligen Nutzer 250,
- eine Angabe über einen Zeitpunkt der jeweiligen Sitzung 251,
- eine Angabe über eine Startseite der jeweiligen Sitzung 252
- eine Angabe über eine Dauer der jeweiligen Sitzung
- eine Angabe über eine Referenz der Startseite
- eine Angabe über eine Anzahl von während der jeweiligen Sitzung besuchten Seiten.

Es ist darauf hinzuweisen, dass obige Auflistung der Teilinformationen einer Information nicht abschließend zu verstehen ist. Eine Information kann auch weitere Teilinformationen umfassen.

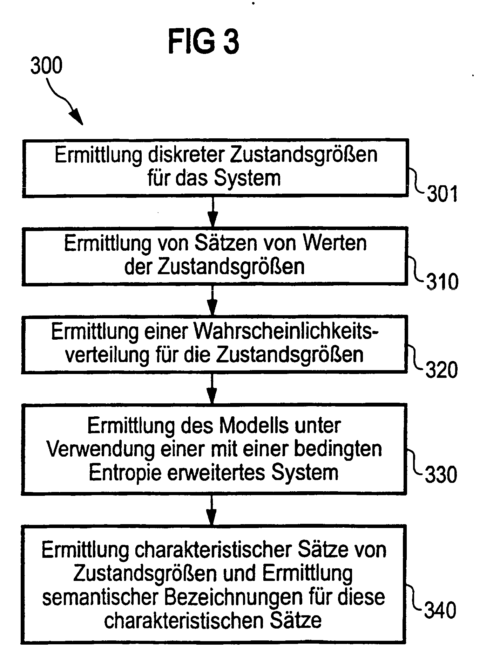

Zur Modellierung eines Systems "Internet-Sitzung" werden unter Verwendung dieser Teilinformationen Variable des Systems "Internet-Sitzung" definiert, welche eine Internet-Sitzung möglichst umfassend beschreiben (vgl. **Fig.3,** Verfahrensschritt 301).

Unter Verwendung des Modells wird anschließend eine weiterführende Analyse und Modellierung von Internet-Sitzungen durchgeführt.

**Fig.3** zeigt Verfahrensschritte 300, welche bei der Modellierung des Systems "Internet-Sitzung" durchgeführt werden:

- einen ersten Verfahrenschritt 301, in dem diskrete Zustandsgrößen, beispielsweise Benutzerklasse oder Anzahl von Sitzungen, für das System ermittelt werden,
- einen zweiten Verfahrenschritt 310, in dem Sätze von Werten der Zustandsgrößen ermittelt werden,
- einen dritten Verfahrensschritt 320, in dem eine Wahrscheinlichkeitsverteilung für die Zustandsgrößen ermittelt wird,
- einen vierten Verfahrensschritt 330, in dem das Modell des Systems ermittelt wird, wobei bei der Ermittlung eine mit einer bedingten Entropie erweiterte Zielfunktion, verwendet wird,
- einen fünften Verfahrensschritt 340, in dem charakteristische Sätze von den Zustandsgrößen ermittelt werden und den charakteristischen Sätze jeweils eine semantische Bezeichnung zugeordnet wird.

Nachfolgend wird die Modellierung des Systems "Internet-Sitzung" erläutert, wobei auf die jeweiligen Verfahrensschritte 300 in **Fig.3** Bezug genommen wird.

Es wird gezeigt, wie das Modell dazu verwendet wird, ein Verhalten von Nutzern im Internet zu beschreiben, typische Szenarien von Nutzern zu extrahieren und typische, wiederkehrende Verhaltensmuster von Nutzern zu bestimmen.

Für den Fall, dass eine Variable des Systems "Internet-Sitzung" eine kontinuierliche Variable ist, beispielsweise eine Dauer einer Sitzung, wird diese Variable diskretisiert, d.h. es wird ein kontinuierlicher Wertebereich der Variablen eingeteilt in Bereiche und diesen Bereichen wird jeweils eine Kennzahl zugeordnet, beispielsweise bis 1 Minute: Kennzahl 1/1 Minute bis 10 Minuten: Kennzahl 2/ 10 Minuten bis 1 Stunde: Kennzahl 3/ mehr als eine Stunde: Kennzahl 4 (vgl. **Fig.3,** Verfahrensschritt 301).

Die definierten und gegebenenfalls diskretisierten Variablen des Systems "Internet-Sitzung" sind:

- Benutzerklasse (lokaler Mitarbeiter/Firmenleitung/.../ sonstige Nutzer),
- Anzahl der Sitzungen in einem betrachteten Zeitraum (ein Besuch/zwei bis fünf Besuche/6 bis 15 Besuche/mehr als 15 Besuche),
- Startzeit einer Sitzung (vor 9 Uhr/ zwischen 9 Uhr und 11 Uhr/...)
- Startseite,
- Dauer der Sitzung
- Referenz zur Startseite
- Anzahl der besuchten Seite
- Homepage (besucht/nicht besucht)
- News (Besucht/nicht besucht).

Es ist zu betonen, dass diese Aufzählung von Variablen nicht als abschließend zu verstehen ist. Es können durchaus weitere Variablen definiert werden, welche das System "Internet-Sitzung" beschreiben.

Die Variablen werden zu einem sogenannten Sitzungsvektor zusammengefasst, wobei Komponenten des Sitzungsvektors die diskreten Variablen sind.

Für die Modellierung des Systems "Internet-Sitzung" wird ein statistisches Wahrscheinlichkeitsmodell P mit einer versteckten Variablen y vom Typ Bayesianisches Netz, wie es in [1] beschrieben ist, verwendet.

Das verwendete statistische Wahrscheinlichkeitsmodell P lässt sich wie folgt beschreiben:

$$P(\mathbf{x} \mid \Theta) \equiv \sum_{j} P(\mathbf{x} \mid y, \Theta) P(y \mid \Theta), \qquad (4)$$

wobei mit $\Theta$ Parameter des Modells, mit x ein Zustand des Systems umfassend Zustandsgrößen xi, mit i ein Index für eine Anzahl N von Zustandsgrößen mit i=1...N, mit P(a|b) eine bedingte Wahrscheinlichkeit einer Variablen a unter der Bedingung einer Variablen b und mit $\sum_{j} (\ldots)$ eine Summation von j Teilmodellen des statistischen Wahrscheinlichkeitsmodells P bezeichnet wird.

Die Anzahl j der Teilmodelle des statistischen Wahrscheinlichkeitsmodell P ist frei vorgebbar. In diesem Fall werden j = 20 Teilmodelle gewählt.

Da der Zustand **x**, in diesem Fall der Sitzungsvektor **x**, nur diskrete Variable aufweist, ist eine 'natürliche Parametrisierung' zu wählen, d.h. die Parameter $\Theta$ des statistischen Wahrscheinlichkeitsmodells entsprechen Elementen einer Wahrscheinlichkeitstafel $P(x_i|y,\Theta)$.

Anschaulich bedeutet dies, dass in diesem Fall die Wahrscheinlichkeitsverteilung P(**x** | y, $\Theta$) beschrieben wird unter Verwendung einer Multinomialverteilung.

Das statistische Wahrscheinlichkeitsmodell P (4) wird in einer Trainingsphase trainiert. Dazu werden aus einem vorgegeben Trainings-LogFile Sitzungsvektoren extrahiert und zu einem Trainingsdatensatz zusammengefasst (vgl. **Fig.3**, Verfahrensschritt 310).

Mit dem Trainingsdatensatz wird das statistische Wahrscheinlichkeitsmodell (4) trainiert (vgl. **Fig.3**, Verfahrensschritt 320 und Verfahrensschritt 330).

In der Trainingsphase wird eine modifizierte Kostenfunktion L$_{mod}$($\Theta$), eine logarithmische Likelihood L($\Theta$) mit einem zusätzlichen Term $K(\Theta)$, der über einen Lagrangeparameter $\lambda$ angekoppelt wird, minimiert (vgl. **Fig.3**, Verfahrensschritt 320 und Verfahrensschritt 330):

$$L_{mod}(\Theta) = \sum_{i} \log\left(P(\mathbf{x}_k \mid \Theta)\right) + \lambda K(\Theta) \qquad (5)$$

wobei mit **x**$_k$ ein Trainingsdatum, mit $\Theta$ im Training anzupassende Parameter, mit log(...) eine Logarithmusfunktion und mit P(**x**$_k$ | $\Theta$) eine bedingte Wahrscheinlichkeit des Trainingsdatum **x**$_k$ unter Bedingung der Parameter bezeichnet wird.

Als zusätzlicher Term $K(\Theta)$ wird eine mittlere (negative) Entropie $E(\Theta)$, welche mit einem Prior $P(y|\Theta)$ gewichtet wird, verwendet (vgl. **Fig.3**, Verfahrensschritt 320).

Es gilt:

$$E(\Theta) = \sum_{y} P(y \mid \Theta) \sum_{\mathbf{x}} P(\mathbf{x} \mid y, \Theta) \log P(\mathbf{x} \mid y, \Theta) \qquad (6)$$

Die Minimierung der modifizierten Kostenfunktion erfolgt unter Verwendung eines Optimierungsverfahren auf der Basis eines Expectation-Maximization-Verfahren (EM-Algorithmus), wie es in [2] beschrieben ist.

Dazu wird folgende Vorschrift durch Veränderung der Parameter $\Theta$ schrittweise optimiert:

$$\Theta^{neu} = \arg\max_{\Theta} \left\{ \sum_{i} \sum_{y} P(y \mid \mathbf{x}_i, \Theta^{alt}) \log P(\mathbf{x}_i, y \mid \Theta) + \lambda E(\Theta) \right\} \qquad (7)$$

wobei mit $\Theta^{alt}$ ein Parameter vor einem Optimierungsschritt und mit $\Theta^{neu}$ ein Parameter nach einem Optimierungsschritt.

Es wird aber darauf hingewiesen, dass bei dem Training auch eine nicht modifizierte Kostenfunktion, eine logarithmische Likelihood L($\Theta$), verwendet werden kann.

Das trainierte statistische Wahrscheinlichkeitsmodell wird nun im weiteren dazu verwendet, um typische Verhaltensmuster von Internet-Nutzern, bezeichnet als Szenarien, zu ermitteln (vgl. **Fig.3,** Verfahrensschritt 340).

Dazu werden für jedes Teilmodell des Modells die bedingten Wahrscheinlichkeiten $P(x_i|y,\Theta)$ ermittelt und hinsichtlich maximal deterministischer Wahrscheinlichkeitsverteilungen der Variablen $x_i$ untersucht.

Als ein Kriterium für eine maximale deterministische Wahrscheinlichkeitsverteilung wird die Kullback-Leibler-Distanz $\sum_{x_i} Q(x_i)\log(Q(x_i)/P(x_i\,|\,y,\Theta))$, welche in [4] beschrieben ist, wobei mit Q(...) eine empirische Wahrscheinlichkeit bezeichnet wird , verwendet.

Dabei wird die zu der Variablen $x_i$ zugehörige Wahrscheinlichkeitsverteilung auf 0% bzw. 100% ab- bzw. aufgerundet. Die ab- bzw. aufgerundeten Verteilungen werden eingefroren, d.h. diese Verteilungen werden im weiteren Verlauf des Verfahrens nicht mehr verändert. Das Training des Modells wird wie beschrieben nochmals durchgeführt.

Damit ist sichergestellt, dass innerhalb jedes Teilmodells zumindest einige Wahrscheinlichkeitsverteilungen einer Variablen xi eine deterministische Struktur haben und damit jedes Teilmodell als ein Szenario interpretierbar ist.

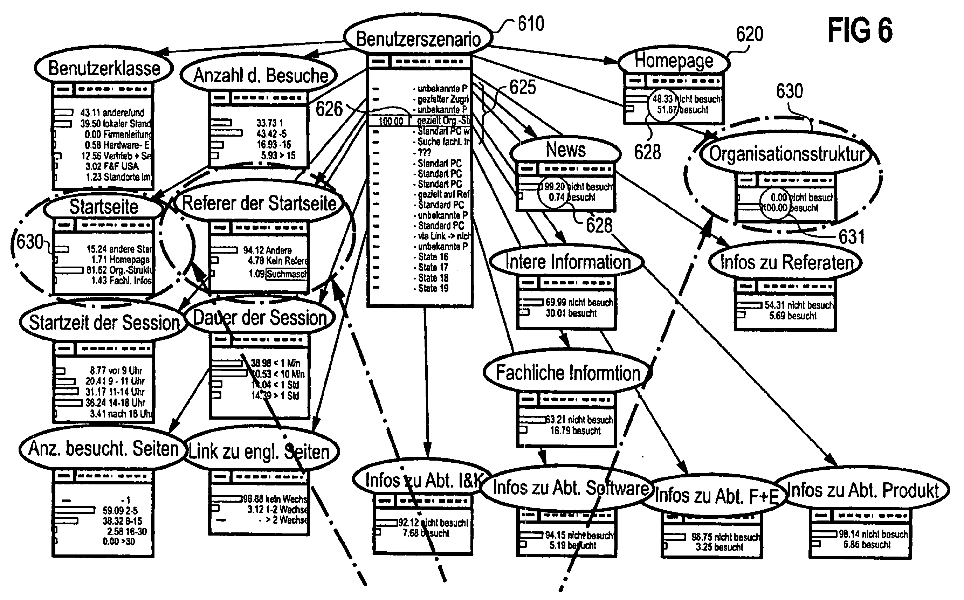

In **Fig.6** ist dargestellt, wie ein Szenario "gezielte Organisationsstruktur" entsprechend obiger Vorgehensweise identifiziert und benannt wird.

**Fig.6** zeigt schematisch die versteckte Variable 610 "Benutzerszenario" mit den Teilmodellen des Systems 625.

Ferner sind in **Fig.6** die Variablen 620 des Systems "Internet-Sitzung", beispielsweise Benutzerklasse und Anzahl der Besuche, dargestellt.

**Fig.6** zeigt ein ausgewähltes Teilmodell 626 und für das ausgewählte Teilmodell 626 die unter Verwendung des trainierten Modells ermittelten zugehörigen Wahrscheinlichkeitsverteilungen 628 der Variablen 620.

Nach Bearbeitung der Wahrscheinlichkeitsverteilungen mit einem Verfahren nach Kullback-Leibler, welches in [4] beschrieben ist, weist die Variable "Organisationsstruktur" 630 eine maximale deterministische Verteilung 631 auf.

Diese maximale deterministische Verteilung 631 der Variablen "Organisationsstruktur" ist somit charakterisierend für das ausgewählte Teilmodell 626. Dementsprechend erhält das ausgewählte Teilmodell eine semantische Bezeichnung "gezielte Organisationsstruktur".

Entsprechend dieser Vorgehensweise werden andere Szenarien, beispielsweise "Standard PC" und "gezielter Zugriff", ermittelt.

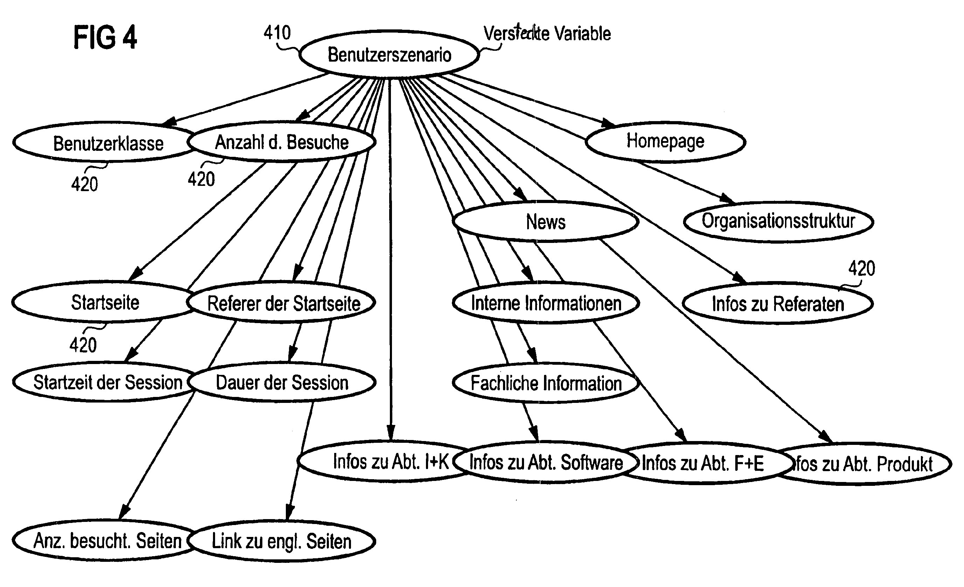

In **Fig.4** ist das statistische Wahrscheinlichkeitsmodell 400 mit einer versteckten Variablen 410 schematisch dargestellt.

**Fig.4** zeigt die versteckte Variable 410, welcher eine semantische Bezeichnung "Benutzerszenario" zugeordnet ist.

**Fig.4** zeigt auch die Variablen 420 des Systems "Internet-Sitzung", beispielsweise "Benutzerklasse", "Anzahl der Besuche", "Startseite" und "Infos zu Referaten".

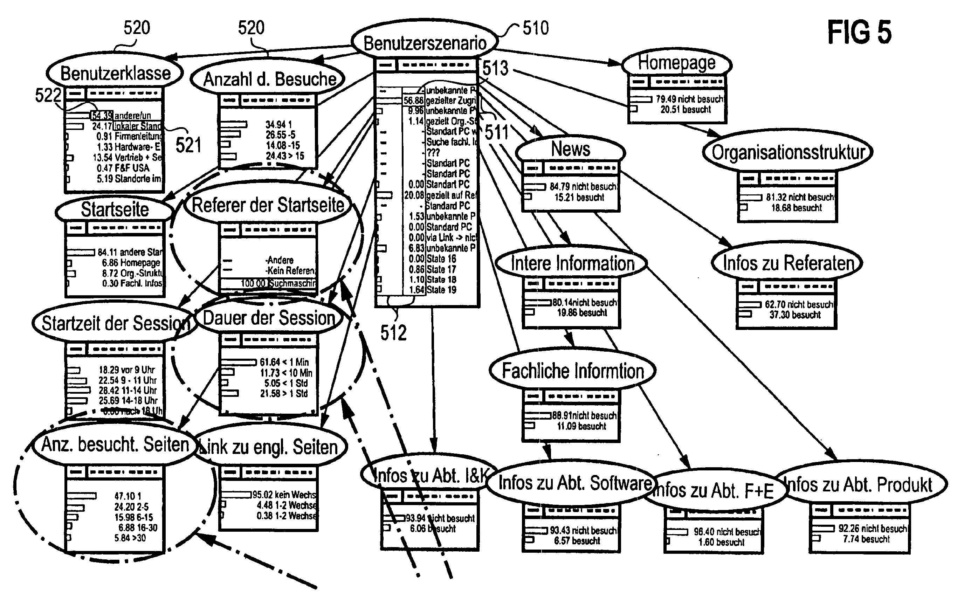

In **Fig.5** ist ein Ergebnis 500 einer Analyse von Internet-Sitzungen, bei denen eine Vielzahl von verschiedenen Nutzern auf eine Internetseite eines ausgewählten Server zugegriffen haben, dargestellt.

Dazu wurde ein LogFile des ausgewählten Servers entsprechend dem oben beschrieben Vorgehen bearbeitet.

**Fig.5** zeigt die versteckte Variable 510 "Benutzerszenario" und die zugehörigen semantisch bezeichneten Szenarien 511, beispielsweise gezielter Zugriff, Standard PC, unbekannte Person.

Für die Szenarien 511 ist jeweils eine Wahrscheinlichkeit 512 angegeben.

Die Wahrscheinlichkeit 512 eines Szenarios 511 gibt an, mit welcher Häufigkeit das Szenario 511 bei den in dem LogFile gespeicherten Internet-Sitzungen aufgetreten ist.

**Fig.5** zeigt auch die Variablen 520 des Systems "Internet-Sitzung", beispielsweise Benutzerklasse, Anzahl der Besuche.

Für die dargestellten Variablen 520 sind jeweils die zugehörigen, diskretisierten Wertebereiche 521 angegeben.

Ferner ist für jede Variable 520 eine Wahrscheinlichkeitsverteilung 522 angegeben, mit welcher die jeweiligen Variable 520 bei den in dem LogFile gespeicherten Internet-Sitzungen auftritt.

Es muss jedoch betont werden, dass die beschriebene Vorgehensweise nicht auf die Modellierung des Systems "Internet-Sitzung" beschränkt ist.

Durch die beschriebene Vorgehensweise kann für jedes beliebige technische System, beispielsweise einem chemischen Reaktor, ein Verkehrssystem oder ein Fehlerdiagnosesystem in einem Kraftfahrzeug, ein Modell ermittelt werden.

In diesem Fall ergeben sich andere Zustandsgrößen, beispielsweise eine chemische Stoffzusammensetzung, eine Stoffkonzentration, eine Verkehrsdichte oder ein Verkehrsfluss.

Bei dem Fehlerdiagnosesystem können die Zustandsgrößen Variablen sein, welche einen Fahrzustand des Kraftfahrzeugs oder eine Elektronik des Kraftfahrzeugs beschreiben, beispielweise eine Geschwindigkeit, ein Motordrehmoment oder eine Motordrehzahl. Die versteckte Variable würde in einem solchen Fall Fehlerzustände des Kraftfahrzeugs bzw. Fehlerszenarien des Kraftfahrzeugs beschreiben, beispielsweise "Fehler in dem Einspritzsystem".

Die Vorgehensweise bei der Modellierung eines solchen Systems ist entsprechend obigen Ausführungen durchzuführen.

Im folgenden werden Alternativen zu dem Ausführungsbeispiel beschrieben.

In einer ersten Alternative zu dem Ausführungsbeispiel wird bei dem Training des statistischen Wahrscheinlichkeitsmodell (4) ein Verfahren auf Basis eines übliches Gradientenbasiertes Verfahren für die Optimierung der Parameter $\Theta$ verwendet.

Dazu wird eine mittlere (negative) Entropie $E'(\Theta)$ gewichtet mit einem 'empirischen Prior' $Q(y|\Theta)$:

$$E'(\Theta) = \sum_y Q(y \mid \Theta) \sum_x P(\mathbf{x} \mid y, \Theta) \log P(\mathbf{x} \mid y, \Theta) \qquad (8)$$

wobei für $Q(y|\Theta)$ gilt:

$$Q(y \mid \Theta) = \frac{1}{K} \sum_i P(y \mid \mathbf{x}_i, \Theta) \; . \qquad (9)$$

Die Zielfunktion bei dem Gradienten-basierten Verfahren lautet in diesem Fall:

$$\mathrm{L_{mod}}(\Theta) = \sum_i \log(\mathrm{P}(\mathbf{x}_i \mid \Theta)) + \lambda \mathrm{E}'(\Theta) \qquad (10)$$

In einer zweiten Alternative zu dem Ausführungsbeispiel wird bei dem Training eine Transformation durchgeführt:

$$M(\Theta) = \sum_y \sum_x P(\mathbf{x}, y \mid \Theta) \log \frac{P(\mathbf{x} \mid y, \Theta)}{P(\mathbf{x} \mid \Theta)} \qquad (11)$$

wobei mit M($\Theta$) der transformierte Term bezeichnet wird.

In diesem Fall wird folgende Vorschrift optimiert:

$$\Theta^{neu} = \arg \max_\Theta \left\{ \sum_i \sum_y P(y \mid \mathbf{x}_i, \Theta^{alt}) \log P(\mathbf{x}_i, y \mid \Theta) + \lambda M(\Theta) \right\} \; . \qquad (12)$$

In einer dritten Alternative zu dem Ausführungsbeispiel wird als ein Kriterium für eine maximale deterministische Wahrscheinlichkeitsverteilung eine Entropie E($\Theta$) mit $\mathrm{E}(\Theta) = -\sum_{\mathbf{x}_i} \mathrm{P}(\mathbf{x}_i \mid y, \Theta) \log \mathrm{P}(\mathbf{x}_i \mid y, \Theta)$ verwendet.

Im Rahmen dieses Dokuments sind folgende Veröffentlichungen zitiert:

[1] Bartholomew et al., Latent Variable Models and Factor Analysis, Charles Grifin, 1987;

[2] Tanner et al., Tools for statistical Inference, Springer 1996;

[3] Grundlagen für das World-Wide-Web (WWW), erhältlich am 16. März 1999 unter: http://www.w3.org/

[4] Cover et al., Elements of Information Theory, Wiley 1991.

**Patentansprüche**

1. Rechner-implementiertes Verfahren zur Ermittlung mindestens eines Teilmodells eines Modells eines technischen Systems, wobei ein Zustand des technischen Systems durch Zustandsgrößen beschrieben wird,

   - bei dem mehrere Sätze von Werten der Zustandsgrößen aus dem technischen System bestimmt werden,
   - bei dem aus den bestimmten Sätzen eine Wahrscheinlichkeitsverteilung für die Zustandsgrößen des technischen Systems ermittelt wird,
   - bei dem unter Verwendung der bestimmten Sätze und der ermittelten Wahrscheinlichkeitsverteilung für die Zustandsgrößen des technischen Systems und unter Verwendung eines statistischen Lernverfahrens das Teilmodell des technischen Systems ermittelt wird, wobei das Teilmodell das technische System unter Voraussetzung der Wahrscheinlichkeitsverteilung für die ermittelten Zustandsgrößen des technischen Systems beschreibt,

   **dadurch gekennzeichnet, dass**

   - zumindest eine der Zustandsgrößen des technischen Systems eine diskrete Zustandsgröße ist, und dass
   - die Wahrscheinlichkeitsverteilung beschrieben wird unter Verwendung einer parametrisierten Verteilung über den Zuständen einer diskreten Variable oder einer Wahrscheinlichkeitstafel für den diskreten Zustandsraum.

2. Verfahren nach Anspruch 1, bei dem das Modell mehrere Teilmodelle umfasst.

3. Verfahren nach Anspruch 2, bei dem alle Zustandsgrössen diskrete Zustandsgrössen sind.

4. Verfahren nach einem der Ansprüche 1 bis 3, bei dem die Wahrscheinlichkeitsverteilung eine Multinomialverteilung oder Binomialverteilung ist.

5. Verfahren nach Anspruch 1 bis 4, bei dem mindestens ein charakteristischer Satz von Werten der Zustandsgrössen ermittelt wird, wobei die Wahrscheinlichkeitsverteilung für die Zustandsgrössen bei dem mindestens einen charakteristischen Satz ein Extremum aufweist.

6. Verfahren nach Anspruch 5, bei dem das Extremum ein Maximum ist.

7. Verfahren nach Anspruch 5 oder 6, bei dem für den charakteristischen Satz eine semantische Bezeichnung bestimmt wird.

8. Verfahren nach einem der Ansprüche 5 bis 7, bei dem mehrere charakteristische Sätze ermittelt werden.

9. Verfahren nach einem der Ansprüche 1 bis 8, bei dem die zumindest eine diskrete Zustandsgrösse durch Diskretisierung einer kontinuierlichen Zustandsgrösse ermittelt wird.

10. Verfahren nach einem der Ansprüche 1 bis 9, bei dem für ein Teilmodell ein Maß für eine statistische Unsicherheit bestimmt wird.

11. Verfahren nach Anspruch 10, bei dem bei dem statistischen Lernverfahren das Maß für die statistische Unsicherheit berücksichtigt wird.

12. Verfahren nach Anspruch 11, bei dem das Maß für die statistische Unsicherheit derart berücksichtigt wird, dass nur ein solches Teilmodell gelernt wird, welches ein kleines Mass für die statistische Unsicherheit aufweist.

13. Verfahren nach einem der Ansprüche 10 bis 12, bei dem das Maß für die statistische Unsicherheit eine bedingte Entropie ist.

14. Verfahren nach einem der Ansprüche 1 bis 13, bei dem das Modell ein Bayesianisches Netzes ist.

**15.** Verfahren nach einem der Ansprüche 1 bis 14, bei dem bei dem statistischen Lernverfahren ein logarithmisches Likelihood bestimmt wird.

**16.** Verfahren nach einem der Ansprüche 1 bis 15, bei dem bei dem statistischen Lernverfahren ein Expectation Maximization-Verfahren durchgeführt wird.

**17.** Verfahren nach einem der Ansprüche 1 bis 16, bei dem ein Zustand des Systems bestimmt wird durch eine Messung von Zustandsgrößen und/oder eine Vorgabe von Zustandsgrößen.

**18.** Verfahren nach einem der Ansprüche 1 bis 17, eingesetzt zu einer Prognose eines Zustands eines Systems

**19.** Verfahren nach Anspruch 18, bei dem bei der Prognose nur teilweise Zustandsgrößen eines Satzes von Zustandsgrößen bestimmt werden und unter Verwendung des Modells und der teilweisen bestimmten Zustandsgrößen weitere Zustandsgrößen dieses Satzes ermittelt werden.

**20.** Verfahren nach einem der Ansprüche 1 bis 19, bei dem das System definiert ist als ein Internetzugriff.

**21.** Verfahren nach Anspruch 20, eingesetzt zu einer Analyse einer Vielzahl von Internetzugriffen.

**22.** Anordnung zur Ermittlung mindestens eines Teilmodells eines Modells eines technischen Systems, wobei ein Zustand des technischen Systems durch Zustandsgrößen des technischen Systems beschrieben wird, mit einem Prozessor, der derart eingerichtet ist, dass

- mehrere Sätze von Werten der Zustandsgrößen aus dem technischen System bestimmbar sind,
- aus den bestimmten Sätzen eine Wahrscheinlichkeitsverteilung für die Zustandsgrößen des technischen Systems ermittelbar ist,
- unter Verwendung der bestimmten Sätze und der ermittelten Wahrscheinlichkeitsverteilung für die Zustandsgrößen des technischen Systems und unter Verwendung eines statistischen Lernverfahrens das Teilmodell des technischen Systems ermittelbar ist, wobei das Teilmodell das technische System unter Voraussetzung der Wahrscheinlichkeitsverteilung für die Zustandsgrößen des technischen Systems beschreibt, **dadurch gekennzeichnet, dass**
- zumindest eine der Zustandsgrößen des technischen Systems eine diskrete Zustandsgröße ist, und dass
- die Wahrscheinlichkeitsverteilung beschrieben wird unter Verwendung einer parametrisierten Verteilung über den Zuständen einer diskreten Variable oder einer Wahrscheinlichkeitstafel für den diskreten Zustandsraum.

**Claims**

**1.** Computer-implemented method for ascertaining at least one submodel in a model of a technical system, where a state of the technical system is described by state variables,

- in which a plurality of sets of values for the state variables are determined from the technical system,
- in which a probability distribution for the state variables of the technical system is ascertained from the particular sets,
- in which the particular sets and the ascertained probability distribution for the state variables of the technical system and also a statistical learning method are used to ascertain the submodel of the technical system, the submodel describing the technical system under the prerequisite of the probability distribution for the ascertained state variables of the technical system,

**characterized in that**

- at least one of the state variables of the technical system is a discrete state variable, and **in that**
- the probability distribution is described using a parameterized distribution over the states of a discrete variable or a probability table for the discrete state space.

**2.** Method according to Claim 1, in which the model comprises a plurality of submodels.

**3.** Method according to Claim 2,
in which all state variables are discrete state variables.

**4.** Method according to one of Claims 1 to 3,
in which the probability distribution is a multinomial distribution or binomial distribution.

**5.** Method according to Claims 1 to 4,
in which at least one characteristic set of values for the state variables is ascertained, with the probability distribution for the state variables in the at least one characteristic set having an extreme value.

**6.** Method according to Claim 5,
in which the extreme value is a maximum.

**7.** Method according to Claim 5 or 6,
in which a semantic descriptor is determined for the characteristic set.

**8.** Method according to one of Claims 5 to 7,
in which a plurality of characteristic sets are ascertained.

**9.** Method according to one of Claims 1 to 8,
in which the at least one discrete state variable is ascertained through discretization of a continuous state variable.

**10.** Method according to one of Claims 1 to 9,
in which a measure of statistical uncertainty is determined for a submodel.

**11.** Method according to Claim 10,
in which the measure of statistical uncertainty is taken into account in the statistical learning method.

**12.** Method according to Claim 11,
in which the measure of statistical uncertainty is taken into account such that only a submodel of the kind which has a small measure of statistical uncertainty is learnt.

**13.** Method according to one of Claims 10 to 12,
in which the measure of statistical uncertainty is a conditional entropy.

**14.** Method according to one of Claims 1 to 13,
in which the model is a Bayesian network.

**15.** Method according to one of Claims 1 to 14,
in which a logarithmic likelihood is determined in the statistical learning method.

**16.** Method according to one of Claims 1 to 15,
in which an expectation maximization method is carried out in the statistical learning method.

**17.** Method according to one of Claims 1 to 16,
in which a state of the system is determined by measuring state variables and/or prescribing state variables.

**18.** Method according to one of Claims 1 to 17,
used for forecasting a state of a system.

**19.** Method according to Claim 18,
in which the forecast involves state variables from a set of state variables being determined only in part, and the model and the partly determined state variables being used to ascertain further state variables in this set.

**20.** Method according to one of Claims 1 to 19,
in which the system is defined as an Internet access operation.

**21.** Method according to Claim 20,

used for analyzing a multiplicity of Internet access operations.

22. Arrangement for ascertaining at least one submodel in a model of a technical system, where a state of the technical system is described by state variables of the technical system, having a processor which is set up such that,

- a plurality of sets of values for the state variables can be determined from the technical system,
- a probability distribution for the state variables of the technical system can be ascertained from the particular sets,
- the particular sets and the ascertained probability distribution for the state variables of the technical system and also a statistical learning method are used to ascertain the submodel of the technical system, the submodel describing the technical system under the prerequisite of the probability distribution for the ascertained state variables of the technical system,

**characterized in that**

- at least one of the state variables of the technical system is a discrete state variable, and **in that**
- the probability distribution is described using a parameterized distribution over the states of a discrete variable or a probability table for the discrete state space.

## Revendications

1. Procédé mis en oeuvre par ordinateur de détermination d'au moins un sous-modèle d'un modèle d'un système technique, en décrivant un état du système technique par des grandeurs d'état,

- dans lequel on détermine plusieurs jeux de valeurs des grandeurs d'état dans le système technique,
- dans lequel on détermine à partir des jeux déterminés une distribution de probabilité des grandeurs d'état du système technique,
- dans lequel en utilisant les jeux déterminés et la distribution de probabilité déterminée des grandeurs d'état du système technique et en utilisant un procédé d'apprentissage statistique on détermine le sous-modèle du système technique avec l'hypothèse préalable de la distribution de probabilité des grandeurs d'état déterminées du système technique,

**caractérisé en ce que**

- au moins l'une des grandeurs d'état du système technique est une grandeur d'état discrète et **en ce que**
- on décrit la distribution de probabilité en utilisant une distribution multinomiale.

2. Procédé suivant la revendication 1, dans lequel le modèle comprend plusieurs sous-modèles.

3. Procédé suivant la revendication 2, dans lequel toutes les grandeurs d'état sont des grandeurs d'état discrètes.

4. Procédé suivant l'une des revendications 1 à 3, dans lequel la distribution de probabilité est une distribution multinomiale ou une distribution binomiale.

5. Procédé suivant l'une des revendications 1 à 4, dans lequel on détermine au moins un jeu caractéristique de valeurs de grandeurs d'état, la distribution de probabilité des grandeurs d'état ayant un extremum pour le au moins un jeu caractéristique.

6. Procédé suivant la revendication 5, dans lequel l'extremum est un maximum.

7. Procédé suivant la revendication 5 ou 6, dans lequel on détermine une désignation sémantique pour le jeu caractéristique.

8. Procédé suivant l'une des revendications 5 à 7,

dans lequel on détermine plusieurs jeux caractéristiques.

9. Procédé suivant l'une des revendications 1 à 8,
   dans lequel on détermine la au moins une grandeur d'état discrète en rendant discrète une grandeur d'état continue.

10. Procédé suivant l'une des revendications 1 à 9,
    dans lequel on détermine pour un sous-modèle une mesure de l'incertitude statistique.

11. Procédé suivant la revendication 10,
    dans lequel on tient compte, dans le procédé d'apprentissage statistique, de la mesure de l'incertitude statistique.

12. Procédé suivant la revendication 11,
    dans lequel on tient compte de la mesure de l'incertitude statistique de façon à ce que ne subisse un apprentissage qu'un sous-modèle qui a une petite valeur de l'insécurité statistique.

13. Procédé suivant l'une des revendications 10 à 12,
    dans lequel la mesure de l'insécurité statistique est une entropie conditionnelle.

14. Procédé suivant l'une des revendications 1 à 13,
    dans lequel le modèle est un réseau de Bayes.

15. Procédé suivant l'une des revendications 1 à 14,
    dans lequel on détermine une probabilité logarithmique dans le procédé d'apprentissage statistique.

16. Procédé suivant l'une des revendications 1 à 15,
    dans lequel on effectue, dans le procédé d'apprentissage statistique, un procédé de maximisation de l'espérance.

17. Procédé suivant l'une des revendications 1 à 16,
    dans lequel on détermine un état du système par une mesure de grandeurs d'état et/ou par une prescription de grandeurs d'état.

18. Procédé suivant l'une des revendications 1 à 17,
    utilisé pour établir un pronostic sur l'état d'un système.

19. Procédé suivant la revendication 18,
    dans lequel on détermine dans le pronostic seulement en partie des grandeurs d'état d'un jeu de grandeurs d'état et en utilisant le modèle et les grandeurs d'état déterminées en partie on détermine d'autres grandeurs d'état de ce jeu.

20. Procédé suivant l'une des revendications 1 à 19,
    dans lequel le système est défini en tant qu'accès Internet.

21. Procédé suivant la revendication 20,
    utilisé pour l'analyse d'une pluralité d'accès Internet.

22. Dispositif de détermination d'au moins un sous-modèle d'un modèle d'un système technique, un état du système technique étant décrit par des grandeurs d'état du système technique, comprenant un processeur qui est tel que

    - plusieurs jeux de valeur des grandeurs d'état peuvent être déterminés dans le système technique,
    - à partir des jeux déterminés, une distribution de probabilité des grandeurs d'état du système technique peut être déterminée,
    - en utilisant le jeu déterminé et la distribution de probabilité déterminée des grandeurs d'état du système technique et en utilisant un procédé d'apprentissage statistique, le sous-modèle du système technique peut être déterminé, le sous-modèle décrivant le système technique dans l'hypothèse préalable de la distribution de probabilité des grandeurs d'état du système technique,

    **caractérisé en ce que**

    - au moins l'une des grandeurs d'état du système technique est une grandeur d'état discrète et **en ce que**

- on décrit la distribution de probabilité en utilisant une distribution multinomiale.

# FIG 1

**FIG 2**

250      251            Logfile            210 Sitzung bzw. Zugriff 1

139.23.185.150 -- [29/Jun/1999:09:14:03+0200] "GET
252 /fachl_infos/techn_abt/se/se3/se3_homepage/images/animation/ztse3_logoanim3.gif HTTP/1.0" 304 0
"http://www.zt.siemens.de/fachl_infos/techn_abt/se/se3/se3_homepage/home.html""Mozilla/4.5 [de]C-CCK-MCD FS SBS
(WinNT; I)"GET /fachl_infos/techn_abt/se/se3/se3_homepage/images/animation/ztse3_logoanim3.gif- "HTTP/1,0"...

250      251                               210 Sitzung bzw. Zugriff 2

139.23.185.151 -- [30/Jun/1999:09:14:03+0200] "GET
252 /fachl_infos/techn_abt/se/se3/se3_homepage/images/animation/ztse3_logoanim3.gif HTTP/1.0" 304 0
"http://www.zt.siemens.de/fachl_infos/techn_abt/se/se3/se3_homepage/home.html""Mozilla/4.5 [de]C-CCK-MCD FS SBS
(WinNT; I)"GET /fachl_infos/techn_abt/se/se3/se3_homepage/images/animation/ztse3_logoanim3.gif- "HTTP/1,0"...

250      251                               210 Sitzung bzw. Zugriff 3

139.23.185.152 -- [01/Juli/1999:09:14:03+0200] "GET
252 /fachl_infos/techn_abt/se/se3/se3_homepage/images/animation/ztse3_logoanim3.gif HTTP/1.0" 304 0
"http://www.zt.siemens.de/fachl_infos/techn_abt/se/se3/se3_homepage/home.html""Mozilla/4.5 [de]C-CCK-MCD FS SBS
(WinNT; I)"GET /fachl_infos/techn_abt/se/se3/se3_homepage/images/animation/ztse3_logoanim3.gif- "HTTP/1,0"...

250      251                               210 Sitzung bzw. Zugriff 4

139.23.185.153 -- [02/Juli/1999:09:14:03+0200] "GET
252 /fachl_infos/techn_abt/se/se3/se3_homepage/images/animation/ztse3_logoanim3.gif HTTP/1.0" 304 0
"http://www.zt.siemens.de/fachl_infos/techn_abt/se/se3/se3_homepage/home.html""Mozilla/4.5 [de]C-CCK-MCD FS SBS
(WinNT; I)"GET /fachl_infos/techn_abt/se/se3/se3_homepage/images/animation/ztse3_logoanim3.gif- "HTTP/1,0"...

EP 1 264 253 B1

# FIG 3

300

| |
|---|
| Ermittlung diskreter Zustandsgrößen für das System |

301

| |
|---|
| Ermittlung von Sätzen von Werten der Zustandsgrößen |

310

| |
|---|
| Ermittlung einer Wahrscheinlichkeits- verteilung für die Zustandsgrößen |

320

| |
|---|
| Ermittlung des Modells unter Verwendung einer mit einer bedingten Entropie erweitertes System |

330

| |
|---|
| Ermittlung charakteristischer Sätze von Zustandsgrößen und Ermittlung semantischer Bezeichnungen für diese charakteristischen Sätze |

340

FIG 4

410 Benutzerszenario    Versteckte Variable

Benutzerklasse    Anzahl d. Besuche    Homepage

420    420

News    Organisationsstruktur

420

Startseite    Referer der Startseite    Interne Informationen    Infos zu Referaten

420

Startzeit der Session    Dauer der Session    Fachliche Information

Infos zu Abt. I+K    Infos zu Abt. Software    Infos zu Abt. F+E    Infos zu Abt. Produkt

Anz. besucht. Seiten    Link zu engl. Seiten

EP 1 264 253 B1

18

**FIG 5**

520 520 510

Benutzerszenario

Benutzerklasse Anzahl d. Besuche 513 Homepage

522 511

79.49 nicht besuch
20.51 besucht

54.39 andere/un
24.17 lokaler Stand
0.91 Firmenleitung
1.33 Hardware- E
13.54 Vertrieb + Se
0.47 F&F USA
5.19 Standorte im

521

34.94 1
26.55 -5
14.08 -15
24.43 > 15

56.88 unbekannte P
9.96 gezielter Zugri
unbekannte P
1.14 gezielt Org.-S
Standart PC w
Suche fachl. I
???
Standart PC
Standart PC
0.00 Standart PC
20.08 gezielt auf Re
Standard PC
1.53 unbekannte P
0.00 Standard PC
0.00 via Link -> nic
6.83 unbekannte P
0.00 State 16
0.86 State 17
1.10 State 18
1.64 State 19

News

Organisationsstruktur

81.32 nicht besuch
18.68 besucht

84.79 nicht besuch
15.21 besucht

Startseite Referer der Startseite

84.11 andere Star
6.86 Homepage
8.72 Org.-Struktu
0.30 Fachl. Infos

-Andere
-Kein Referen
100.00 Suchmaschin

Intere Information

Infos zu Referaten

80.14 nicht besuch
19.86 besucht

62.70 nicht besuch
37.30 besucht

Startzeit der Session Dauer der Session

512

18.29 vor 9 Uhr
22.54 9 - 11 Uhr
28.42 11-14 Uhr
25.69 14-18 Uhr
6.00 nach 18 Uh

61.64 < 1 Min
11.73 < 10 Min
5.05 < 1 Std
21.58 > 1 Std

Fachliche Informtion

88.91 nicht besuch
11.09 besucht

Anz. besucht. Seiten Link zu engl. Seiten

47.10 1
24.20 2-5
15.98 6-15
6.88 16-30
5.84 >30

95.02 kein Wechs
4.48 1-2 Wechse
0.38 1-2 Wechse

Infos zu Abt. I&K Infos zu Abt. Software Infos zu Abt. F+E Infos zu Abt. Produkt

93.94 nicht besucht
6.06 besucht

93.43 nicht besuch
6.57 besucht

96.40 nicht besuch
1.60 besucht

92.26 nicht besuch
7.74 besucht

FIG 6